# EUROPÄISCHE PATENTSCHRIFT

(11) **EP 3 433 142 B1**
(45) Veröffentlichungstag und Bekanntmachung des Hinweises auf die Patenterteilung: **01.05.2019**
(21) Anmeldenummer: 17748691.7
(22) Anmeldetag: 24.07.2017
(51) Int. Cl.: B60R 25/33

(54) **VERFAHREN ZUM BETREIBEN EINER ZENTRALVERRIEGELUNGSVORRICHTUNG, ZENTRALVERRIEGELUNGSVORRICHTUNG UND KRAFTFAHRZEUG**
CONTROL METHOD FOR A CENTRAL LOCKING SYSTEM, CENTRAL LOCKING SYSTEM AND MOTOR VEHICLE
PROCÉDÉ ET SYSTÈME DE CONDAMNATION CENTRALISÉE ET VÉHICULE À MOTEUR

(30) Priorität: 09.11.2016 DE 102016221924
(43) Veröffentlichungstag der Anmeldung: 30.01.2019
(73) Patentinhaber: Audi AG, 85045 Ingolstadt (DE)
(72) Erfinder: SCHLITTENBAUER, Michael, 85049 Ingolstadt (DE)
(86) Internationale Anmeldenummer: PCT/EP2017/068677
(87) Internationale Veröffentlichungsnummer: WO 2018/086773

(56) Entgegenhaltungen:
- DE-A1-102013 015 478
- DE-A1-102015 015 886
- US-A1- 2006 085 128
- US-A1- 2007 203 618

## Beschreibung

Die Erfindung betrifft ein Verfahren zum Betreiben einer Zentralverriegelungsvorrichtung. Zu der Erfindung gehört auch eine Zentralverriegelungsvorrichtung, die gemäß dem erfindungsgemäßen Verfahren betreibbar ist. Schließlich umfasst die Erfindung auch ein Kraftfahrzeug mit der erfindungsgemäßen Zentralverriegelungsvorrichtung.

Aus dem allgemeinen Stand der Technik sind Zentralverriegelungssysteme bekannt, die während einer Fahrt ab einer Geschwindigkeit von beispielsweise 30 km/h automatisch die Zentralverriegelung aktivieren und das Kraftfahrzeug somit von innen verriegeln. Das heißt, ein Fahrer oder ein Fahrgast des Kraftfahrzeugs kann aussteigen, aber von außen ist kein Zutritt zum Kraftfahrzeug möglich. Dieses System verhindert während einer Fahrt mit dem Kraftfahrzeug, zum Beispiel bei Ampelstopps, ein unbefugtes Öffnen der Türen des Kraftfahrzeugs von außen. Zum Entriegeln der Zentralverriegelung kann der Fahrer oder Beifahrer beispielsweise ein Bedienelement, wie beispielsweise eine Entriegelungstaste, in einem Innenraum des Kraftfahrzeugs betätigen. Möchte eine Person dem Kraftfahrzeug zusteigen, so muss der Fahrer zunächst durch eine Betätigung des Bedienelements die Zentralverriegelung entriegeln.

Aus dem Stand der Technik sind zum Entriegeln der Zentralverriegelung weitere technische Ausführungen bekannt.

Aus der DE 10 2012 020 414 A1 ist beispielsweise ein Verfahren zum Steuern mehrerer Schließeinrichtungen eines Kraftfahrzeugs bekannt. Die Schließeinrichtungen sind dabei jeweils einem Detektionsbereich zugeordnet, welcher einen Bereich des Kraftfahrzeugs umfasst, in oder an welchem die jeweilige Schließeinrichtung angeordnet ist. Bei einer Annäherung eines Kraftfahrzeugführers wird die Annäherung in dem der Schließeinrichtung zugeordneten Detektionsbereich erfasst und die Schließeinrichtung entriegelt.

Aus der DE 10 2013 206 197 A1 geht ein Verfahren zur Steuerung einer Zentralverriegelungsanordnung bei einem Kraftfahrzeug mit mehreren Fahrzeugtüren hervor. Die Zentralverriegelungsanordnung weist Verriegelungsaktoren und eine Steuereinrichtung auf, die mit den Verriegelungsaktoren zur selektiven Verriegelung oder Entriegelung in Wirkverbindung steht. Die Steuereinrichtung ist dazu eingerichtet, Fahrzeugbetriebsparameter zu erfassen und in Abhängigkeit der erfassten Fahrzeugbetriebsparameter ein individuelles Verriegelungsverhalten der einzelnen Fahrzeugtüren zu realisieren.

In der EP 1 013 860 A1 ist eine Schließeinrichtung für ein Kraftfahrzeug mit mehreren Türen beschrieben. Die Schließeinrichtung umfasst einen tragbaren Sender und einen an dem Kraftfahrzeug anzuordnenden Empfänger für einen Code des Senders. Ferner umfasst die Schließeinrichtung eine Steuereinrichtung zum Ansteuern von Schlössern der Türen und zum Erfassen einer Position des tragbaren Senders. Die Steuereinrichtung ist ferner dazu eingerichtet, zumindest eines der in Abhängigkeit von der Position des Senders vorgesehenen Schlösser anzusteuern.

In der DE 10 2013 015 478 A1 ist ein Verfahren zum Erkennen zumindest eines mobilen Kommunikationsgeräts innerhalb eines zu definierenden Radius um ein Lesegerät eines Kraftfahrzeugs beschrieben. Bei dem Verfahren werden eine aktuelle Position des Kraftfahrzeugs und eine aktuelle Position des Kommunikationsgeräts bestimmt. Anschließend werden die beiden Positionen miteinander verglichen, um herauszufinden, ob sich die Position des Kommunikationsgeräts innerhalb des Radius befindet.

Derartige Zentralverriegelungsanordnungen oder Schließeinrichtungen sind besonders komplex ausgestaltet.

Aufgabe der vorliegenden Erfindung ist es daher, ein Verfahren zum Betreiben einer Zentralverriegelungsvorrichtung, eine Zentralverriegelungsvorrichtung sowie ein Kraftfahrzeug mit einer Zentralverriegelungsvorrichtung zu vereinfachen und zugleich eine Sicherheit und einen Komfort der Fahrzeuginsassen während einer Fahrt mit dem Kraftfahrzeug zu erhöhen.

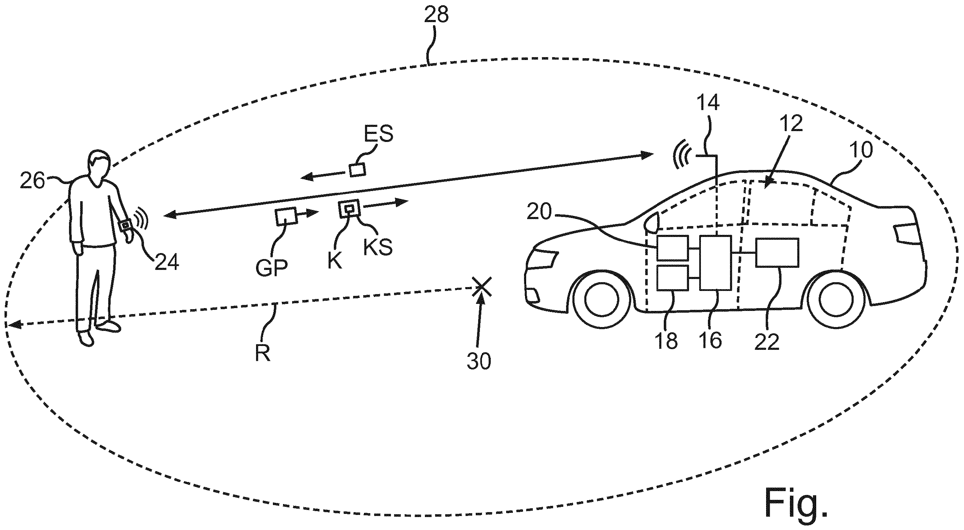

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figur offenbart.

Erfindungsgemäß wird diese Aufgabe gelöst durch ein Verfahren zum Betreiben einer Zentralverriegelungsvorrichtung eines Kraftfahrzeugs, welches durch eine Zentralverriegelung der Zentralverriegelungsvorrichtung aufgrund einer Fahrt über eine Mindestgeschwindigkeit verriegelt worden ist und danach unter die Mindestgeschwindigkeit verlangsamt worden ist. Zum anschließenden Entriegeln der Zentralverriegelung wird eine aktuelle Geoposition eines portablen mobilen Endgeräts, welches die Geoposition aussendet, mittels einer Erfassungseinrichtung der Zentralverriegelungsvorrichtung empfangen. Dabei ist das portable mobile Endgerät bevorzugt nicht Teil des Kraftfahrzeugs. Beispielsweise sendet das portable mobile Endgerät die Geoposition von außerhalb des Kraftfahrzeugs. Alternativ kann sich das portable mobile Endgerät auch im Kraftfahrzeug befinden und von dort aus die Geoposition aussenden.

Anschließend wird die aktuelle Geoposition des portablen mobilen Endgeräts mittels einer Steuereinrichtung der Zentralverriegelungsvorrichtung ausgewertet, wobei beim Auswerten der aktuellen Geoposition die Steuereinrichtung überprüft, ob die aktuelle Geoposition innerhalb eines abgegrenzten vorbestimmten Bereichs liegt, welcher in der Steuereinrichtung hinterlegt ist. Schließlich wird die Zentralverriegelung des Kraftfahrzeugs mittels der Steuereinrichtung entriegelt, wenn die aktuelle Geoposition innerhalb des abgegrenzten vorbestimmten Bereichs liegt. Mit anderen Worten kann zum Entriegeln der Zentralverriegelung ein Entriegelungskriterium, nämlich die erfasste aktuelle Geoposition innerhalb des abgegrenzten vorbestimmten Bereichs, zu erfüllen sein.

Durch die Abstimmung der aktuellen Geoposition des portablen mobilen Endgeräts wird sichergestellt, dass nur entriegelt wird, wenn sich das portable mobile Endgerät an einer vorbestimmten Position, nämlich innerhalb des abgegrenzten vorbestimmten Bereichs, befindet. Durch die Positionsabstimmung zum Entriegeln der Zentralverriegelung wird weiterhin eine Sicherheit des Fahrers oder Beifahrers während einer Fahrt mit dem Kraftfahrzeug, insbesondere vor einem unbefugten Öffnen oder Zutritt von außen in das Kraftfahrzeug, durch die Zentralverriegelungsvorrichtung gewährleistet. Gleichzeitig wird ein Komfort für den Fahrer oder Beifahrer erhöht, indem die Zentralverriegelung automatisch ohne ein manuelles Betätigen einer Entriegelungstaste durch den Fahrer oder Beifahrer entriegelt wird.

Bei einer Zentralverriegelung handelt es sich bevorzugt um eine Vorrichtung, mit der in dem Kraftfahrzeug alle Fahrzeugtüren gleichzeitig verriegelt werden können. Mit "Verriegeln" ist hier insbesondere gemeint, dass die Fahrzeugtüren verschlossen, also nicht zu öffnen, sind. Besonders bevorzugt sind die Fahrzeugtüren bei einer Verriegelung der Zentralverriegelung von innen verriegelt. Das heißt, ein Fahrer oder Beifahrer kann die Fahrzeugtüren von innen, also aufseiten eines Innenraums des Kraftfahrzeugs, öffnen. Von außen sind die Fahrzeugtüren nicht zu öffnen, wenn die Fahrzeugtüren verriegelt sind.

Mit "abgegrenzten vorbestimmten Bereich" ist bevorzugt ein geographisches Gebiet gemeint, welches durch Grenzen festgelegt ist. Mit anderen Worten kann der abgegrenzte vorbestimmte Bereich eine geschlossene geographische Fläche definieren. Mit "Geoposition" sind bevorzugt geographische Koordinaten einer Position des portablen mobilen Endgeräts gemeint.

Bei der vorliegenden Erfindung wird die Zentralverriegelung verriegelt oder aktiviert, wenn nach einem Fahrtbeginn mit dem Kraftfahrzeug das Kraftfahrzeug eine Mindestgeschwindigkeit erreicht oder über die Mindestgeschwindigkeit beschleunigt wird. Bei der Mindestgeschwindigkeit handelt es sich um einen Wert einer Fahrtgeschwindigkeit des Kraftfahrzeugs. Beispielsweise kann die Mindestgeschwindigkeit einen Wert zwischen 5 km/h und 40 km/h, insbesondere einen Wert von 30 km/h, aufweisen. Ist die Zentralverriegelung des Kraftfahrzeugs verriegelt, so bleibt die Zentralverriegelung solange verriegelt, bis durch eine Erfassungseinrichtung eine aktuelle Geoposition des portablen mobilen Endgeräts empfangen wird und diese aktuelle Geoposition innerhalb eines abgegrenzten vorbestimmten Bereichs, insbesondere außerhalb des Kraftfahrzeugs, liegt. Dazu überprüft die Steuereinrichtung, insbesondere in einer Auswertephase, ob die aktuelle Geoposition des portablen mobilen Endgeräts innerhalb des abgegrenzten vorbestimmten Bereichs, also innerhalb eines vorbestimmten Gebiets, liegt. Liegt die aktuelle Geoposition des portablen mobilen Endgeräts nicht innerhalb des abgegrenzten vorbestimmten Bereichs, so wird die Zentralverriegelung bevorzugt nicht entriegelt.

Sobald die Zentralverriegelung entriegelt ist, kann eine Person, welche sich außerhalb des Kraftfahrzeugs befindet und das portable mobile Endgerät mit sich trägt, eine Fahrzeugtür des Kraftfahrzeugs öffnen und in das Kraftfahrzeug einsteigen. Alternativ oder zusätzlich kann es auch vorgesehen sein, dass sobald die Zentralverriegelung entriegelt ist, eine Person, welche sich innerhalb des Kraftfahrzeugs befindet und das portable mobile Endgerät mit sich trägt, eine Fahrzeugtür des Kraftfahrzeugs öffnen und aus dem Kraftfahrzeug aussteigen kann. Damit die Person zusteigen oder aussteigen kann, muss das Kraftfahrzeug zum Stehen gebracht werden.

Damit der abgegrenzte vorbestimmte Bereich vorgegeben ist, sieht eine Ausführungsform vor, dass der abgegrenzte vorbestimmte Bereich, insbesondere vor der Fahrt, durch Vorgabe eines Radius um eine vorbestimmte Geoposition festgelegt wird. Zum Beispiel kann ein Nutzer oder ein Fahrer oder ein Beifahrer des Kraftfahrzeugs einen Bereich oder ein Gebiet vorgeben oder eingeben. Dazu kann die Zentralverriegelungsvorrichtung einen Zentralcomputer aufweisen. Mittels einer Eingabeeinrichtung des Zentralcomputers kann der Nutzer den abgegrenzten vorbestimmten Bereich eingeben. Zur Eingabe der vorbestimmten Geoposition kann der Zentralcomputer ein Navigationssystem umfassen. Beispielsweise kann der Nutzer als vorbestimmte Geoposition eine geographische Koordinate oder geographische Koordinaten vorgeben. Anschließend kann der Nutzer einen Radius um die Koordinate vorgeben oder festlegen, um den Bereich festzulegen. Die Vorgabe eines vorbestimmten Bereichs um eine Koordinate kann auch als "Geofencing" bezeichnet werden. Der Nutzer kann also einen Geofence vorgeben. Holt der Nutzer beispielsweise Beifahrer täglich oder Werktags von der gleichen Stelle - der vorbestimmten Geoposition - in einem Ort ab, so kann er diese Stelle durch den abgegrenzten vorbestimmten Bereich festlegen. Beispielsweise kann der Nutzer Kinder von der Schule abholen. Dann kann der Nutzer die Geoposition der Schule also vorbestimmte Geoposition vorgeben und um die Schule einen Radius ziehen, um den abgegrenzten, vorbestimmten Bereich festzulegen. Beispielsweise kann der Nutzer den Ort, die Straße und die Hausnummer, als vorbestimmte Geoposition in ein Navigationssystem eingeben. Der Zentralcomputer kann dabei das Navigationssystem umfassen. Der Radius kann sich dabei zwischen 5 Meter und 100 Meter um die vorbestimmte Geoposition ziehen. Anstelle einen Radius um eine vorbestimmte Geoposition zu ziehen, kann es alternativ auch vorgesehen sein, ein Rechteck, als abgegrenzten vorbestimmten Bereich, um die vorbestimmte Geoposition zu legen, sodass die vorbestimmte Geoposition den Mittelpunkt des Rechtecks bildet. Zusätzlich oder alternativ kann der Nutzer auch mehrere abgegrenzte, vorbestimmte Bereiche festlegen. Der Nutzer kann die Bereiche selbst bestimmen und festlegen, an denen ein Zustieg weiterer Personen erwünscht ist. Dadurch ergibt sich der Vorteil, dass auf besonders einfache und zuverlässige Art und Weise die Vorgabe eines abgegrenzten, vorbestimmten Bereichs gewährleistet ist.

In vorteilhafter Weise wird die Zentralverriegelung erst entriegelt, wenn bei Empfangen der aktuellen Geoposition des portablen mobilen Endgeräts sich auch das Kraftfahrzeug innerhalb des abgegrenzten vorbestimmten Bereichs befindet. Legt also der Nutzer den abgegrenzten vorbestimmten Bereich um eine vorbestimmte Geoposition fest, so kann die Zentralverriegelung erst oder nur entriegelt werden, wenn sich das portable mobile Endgerät und das Kraftfahrzeug innerhalb der Grenzen des begrenzten vorbestimmten Bereichs befinden. Die aktuelle Position des Kraftfahrzeugs kann durch eine weitere Erfassungseinrichtung der Zentralverriegelungsvorrichtung erfasst werden. Die weitere Erfassungseinrichtung kann beispielsweise als Navigationssystem oder GPS-Tracker ausgebildet sein. Durch die weitere Vorgabe, dass sich das portable mobile Endgerät und das Kraftfahrzeug innerhalb des abgegrenzten vorbestimmten Bereichs aufhalten oder befinden müssen, damit die Zentralverriegelung entriegelt wird, ist ein weiteres Sicherheitskriterium zu erfüllen, wodurch die Sicherheit beim Betreiben der Zentralverriegelungsvorrichtung weiter erhöht wird.

Gemäß einer vorteilhaften Weiterbildung ist es vorgesehen, dass die Zentralverriegelung nur entriegelt wird, falls die Zündung des Kraftfahrzeugs eingeschaltet ist und/oder ein Funkschlüssel im Fahrzeuginnenraum detektiert wird. Dadurch ist zum Entriegeln der Zentralverriegelung neben der Positionsvorgabe des portablen mobilen Endgeräts zumindest noch eine weitere Bedingung erforderlich. Mit anderen Worten kann das Entriegelungskriterium eine weitere Bedingung aufweisen. Wird durch die Erfassungseinrichtung erfasst, dass sich das portable mobile Endgerät innerhalb des abgegrenzten vorbestimmten Bereichs befindet, so kann mittels der Steuereinrichtung zusätzlich erfasst oder überprüft werden, ob die Zündung des Kraftfahrzeugs eingeschaltet oder aktiviert ist und/oder ob sich der Funkschlüssel des Kraftfahrzeugs in dem Fahrzeuginnenraum des Kraftfahrzeugs befindet. Ist die Zündung des Kraftfahrzeugs eingeschaltet und/oder wird der Funkschlüssel detektiert und befindet sich das portable mobile Endgerät innerhalb des abgegrenzten vorbestimmten Bereichs, so wird die Zentralverriegelung entriegelt. Das Kraftfahrzeug muss zum Entriegeln der Zentralverriegelung bevorzugt also in Betrieb sein und/oder es muss sich der Funkschlüssel im Kraftfahrzeug befinden. Beispielsweise kann der Funkschlüssel erfasst werden, wenn er in einem Zündschloss des Kraftfahrzeugs angeordnet ist. Dadurch ergibt sich der Vorteil, dass die Sicherheit der Insassen des Kraftfahrzeugs weiter erhöht werden kann, da durch die Steuereinrichtung zumindest zwei Bedingungen zum Entriegeln der Zentralverriegelung geprüft werden.

Eine weitere Ausführungsform sieht vor, dass eine Kennung des portablen mobilen Endgeräts durch die Erfassungseinrichtung empfangen wird und mit zumindest einer der Steuereinrichtung hinterlegten Kennung verglichen wird, wobei die Zentralverriegelung erst entriegelt wird, wenn zusätzlich die empfangene Kennung mit der zumindest einen Kennung übereinstimmt. Bevorzugt wird die Kennung des portablen mobilen Endgeräts bei oder nach Empfangen der aktuellen Geoposition des portablen mobilen Endgeräts empfangen. Dazu vergleicht die Steuereinrichtung, insbesondere in einer Auswertephase, die empfangene Kennung mit der der Steuereinrichtung hinterlegten Kennung. Die Auswertephase kann beispielsweise beginnen, sobald die Erfassungseinrichtung das Kennungssignal oder die aktuelle Geoposition des portablen mobilen Endgeräts empfängt. Das portable mobile Endgerät befindet sich dabei bevorzugt außerhalb des Kraftfahrzeugs, also in einer Umgebung des Kraftfahrzeugs. Die Kennung, die der Steuereinrichtung hinterlegt ist, kann beispielsweise in einem Speicher der Steuereinrichtung abgelegt oder gespeichert sein. Es können auch mehrere Kennungen der Steuereinrichtung hinterlegt sein.

Damit die Kennung oder mehrere Kennungen der Steuereinrichtung hinterlegt sind, kann der Nutzer eine oder mehrere Kennungen vorgeben oder eingeben. Zum Hinterlegen der Kennung oder der Kennungen weist die Zentralverriegelungsvorrichtung den Zentralcomputer auf. Mittels der Eingabeeinrichtung des Zentralcomputers kann der Nutzer die Kennung oder mehrere Kennungen eines oder mehrerer portabler mobiler Endgeräte eingeben. Alternativ kann auch ein Anlernvorgang zum Hinterlegen der Kennungen erfolgen. Dabei kann die Erfassungseinrichtung eines oder mehrere portable mobile Endgeräte Erfassen und deren Kennung abfragen. Dem Nutzer können dann auf einem Bildschirm der Eingabeeinrichtung, welcher beispielsweise an einer Mittelkonsole in einem Innenraum des Kraftfahrzeugs angeordnet ist, die Kennung oder mehrere Kennungen erfasster portabler mobiler Endgeräte angezeigt werden. Durch eine Bestätigung des Nutzers kann die erfasste Kennung oder können die erfassten Kennungen der Steuereinrichtung hinterlegt werden. Die Bestätigung des Nutzer kann dabei durch eine Bestätigungshandlung, wie beispielsweise durch ein Drücken eines Bedienelements der Eingabeeinrichtung, erfolgen.

Stimmt die erfasste Kennung, welche durch das Kennungssignal von dem portablen mobilen Endgerät übermittelt wird, nicht mit der Kennung überein, die der Steuereinrichtung hinterlegt ist, so wird die Zentralverriegelung bevorzugt nicht entriegelt.

Durch den Vergleich der Kennungen - der empfangenen Kennung und der Steuereinrichtung hinterlegten Kennung - wird bevorzugt eine Authentifizierung oder Identifizierung des portablen mobilen Endgeräts durchgeführt. Mit einem "Vergleich der Kennungen" ist hier insbesondere gemeint, dass ein Schlüssel des portablen mobilen Geräts mit einem der Steuereinrichtung hinterlegten Schlüssel verifiziert wird. Die Erfassungseinrichtung kann dazu eingerichtet sein, ein Erfassungssignal auszusenden und ein Kennungssignal von dem portablen mobilen Endgerät zu empfangen. Das portable mobile Endgerät kann dazu eingerichtet sein, beim Empfangen des Erfassungssignals das Kennungssignal auszugeben. Durch das Aussenden des Erfassungssignals kann die Erfassungseinrichtung die Kennung, insbesondere eine digitale Kennung oder den Schlüssel, des portablen mobilen Endgeräts abfragen.

Durch den Abgleich der Kennungen wird sichergestellt, dass nur durch eine berechtigte Kennung des portablen mobilen Endgeräts in einer Umgebung des Kraftfahrzeugs die Zentralverriegelung entriegelt wird. Durch die Abstimmung von Kennungen zum Entriegeln der Zentralverriegelung wird weiterhin eine Sicherheit des Fahrers oder Beifahrers während einer Fahrt mit dem Kraftfahrzeug, insbesondere vor einem unbefugten Öffnen oder Zutritt von außen in das Kraftfahrzeug, durch die Zentralverriegelungseinrichtung gewährleistet.

In vorteilhafter Weise wird bei Empfangen der aktuellen Geoposition des portablen mobilen Endgeräts eine Uhrzeit erfasst, wobei die Zentralverriegelung erst entriegelt wird, wenn die Uhrzeit, zu der die aktuelle Geoposition empfangen wurde, innerhalb eines der Steuereinrichtung hinterlegten Zeitfensters liegt. Mit "Zeitfenster" ist bevorzugt ein Zeitraum gemeint. Möchte der Nutzer beispielsweise Kinder Werktags von der Schule abholen und endet die Schule um 13 Uhr, so kann er als Zeitfenster beispielsweise eine Zeit zwischen 13 Uhr und 13:30 Uhr vorgeben. Alternativ oder zusätzlich kann neben dem Zeitfenster auch ein Datum, also ein vorbestimmter Tag, vorgegeben werden. Durch das weitere Entriegelungskriterium des Zeitfensters und/oder Datums kann eine fehlerhafte Entriegelung der Zentralverriegelung vermieden werden und dadurch die Sicherheit der Fahrzeuginsassen weiter erhöht werden.

In vorteilhafter Weise wird beim Deaktivieren der Zentralverriegelung eine oder mehrere Fahrzeugtüren des Kraftfahrzeugs entriegelt, wobei die Fahrzeugtüren in Abhängigkeit von einer Sitzbelegung in einem Innenraum des Kraftfahrzeugs und/oder einer Annäherung des portablen mobilen Endgeräts von außen an eine Fahrzeugtüre entriegelt werden. Die Zentralverriegelungsvorrichtung kann zur Erfassung einer Sitzbelegung und/oder zur Erfassung einer Annäherung eine weitere Erfassungseinrichtung aufweisen. Beispielsweise kann die weitere Erfassungseinrichtung zur Erfassung der Sitzbelegung eine Kamera, welche auf einen Fahrzeuginnenraum des Kraftfahrzeugs gerichtet ist, und/oder einen Sitzbelegungssensor umfassen. Zur Annäherungserkennung kann die weitere Erfassungseinrichtung beispielsweise eine Kamera aufweisen, welche auf die Umgebung des Kraftfahrzeugs gerichtet ist. Durch die Erfassung der Sitzbelegung und/oder der Annäherung werden nur die Fahrzeugtüren geöffnet, neben denen Sitzplatz nicht belegt ist oder an welche Tür sich eine Person annähert.

Um das erfindungsgemäße Verfahren durchführen zu können, ist durch die Erfindung auch eine Zentralverriegelungsvorrichtung für ein Kraftfahrzeug bereitgestellt. Eine Steuereinrichtung der Zentralverriegelungsvorrichtung ist dazu eingerichtet, eine Zentralverriegelung aufgrund einer Fahrt des Kraftfahrzeugs über einer Mindestgeschwindigkeit zu verriegeln. Die Zentralverriegelungsvorrichtung umfasst eine Erfassungseinrichtung, welche dazu eingerichtet ist, eine aktuellen Geoposition eines portablen mobilen Endgeräts zu empfangen, welches die Geoposition aussendet. Ferner weist die Zentralverriegelungsvorrichtung die Steuereinrichtung auf, welche dazu eingerichtet ist, die aktuelle Geoposition des portablen mobilen Endgeräts auszuwerten, wobei beim Auswerten der aktuellen Geoposition die Steuereinrichtung dazu eingerichtet ist, zu überprüfen, ob die aktuelle Geoposition innerhalb eines abgegrenzten, vorbestimmten Bereichs liegt, welcher in der Steuereinrichtung hinterlegt ist. Zudem ist die Steuereinrichtung dazu eingerichtet, die Zentralverriegelung zu entriegeln, wenn das Kraftfahrzeug unter die Mindestgeschwindigkeit verlangsamt worden ist und die aktuelle Geoposition innerhalb des abgegrenzten, vorbestimmten Bereichs liegt.

Eine vorteilhafte Weiterbildung der Erfindung sieht vor, dass das portable mobile Endgerät als Mobiltelefon oder als elektrische Uhr, insbesondere als Smartwatch, oder als Tabletcomputer oder als Augmented Reality Brille (AR Brille) oder als Headset (engl. Kopfhörer) ausgebildet ist.

In vorteilhafter Weise ist die Erfassungseinrichtung als Dachantenne ausgebildet ist und/oder die Erfassungseinrichtung dazu eingerichtet, ein WLAN-Signal oder ein Bluetooth-Signal oder ein GPS-Signal zu empfangen. Bei dem WLAN-Standard handelt es sich beispielsweise um IEEE 802.11. Der IEEE 802.11 bezeichnet eine IEEE-Norm für Kommunikation in Funknetzwerken. Das portable mobile Endgerät kann über Bluetooth und/oder über ein drahtloses lokales Netzwerk, also wireless, mit dem Kraftfahrzeug kommunizieren. Dabei kann die Erfassungseinrichtung dazu eingerichtet sein, ein WLAN-Signal oder Bluetooth-Signal als Kennungssignal zu empfangen. Beispielsweise liefert das Bluetooth-signal eine MAC Adresse. Dadurch ergibt sich der Vorteil, dass auf besonders einfache und zuverlässige Art und Weise ein Kommunikationsnetzwerk ausgebildet werden kann.

Insbesondere ist vorgesehen, dass die Zentralverriegelungsvorrichtung in einem Kraftfahrzeug realisiert ist. Entsprechend sieht die Erfindung auch ein Kraftfahrzeug mit einer Ausführungsform der erfindungsgemäßen Zentralverriegelungsvorrichtung vor. Das erfindungsgemäße Kraftfahrzeug ist bevorzugt als Kraftwagen, insbesondere als Personenkraftwagen, ausgestaltet.

Die für das erfindungsgemäße Verfahren beschriebenen Vorteile und bevorzugten Ausführungsformen gelten auch für das erfindungsgemäße Kraftfahrzeug und die erfindungsgemäße Zentralverriegelungsvorrichtung und umgekehrt.

Im Folgenden ist ein Ausführungsbeispiel der Erfindung beschrieben. Hierzu zeigt die einzige Figur (Fig.) in einer schematischen Darstellung ein Kraftfahrzeug 10 mit einer Zentralverriegelungsvorrichtung 12.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Zentralverriegelungsvorrichtung 12 umfasst eine Erfassungseinrichtung 14, eine Steuereinrichtung 16, eine Eingabeeinrichtung 18, eine weitere Erfassungseinrichtung 20 und eine Zentralverriegelung 22.

Die Zentralverriegelung 22 ist dazu eingerichtet, Fahrzeugtüren des Kraftfahrzeugs 10, insbesondere von innen, zu verriegeln. Beispielsweise kann bei einem Fahrtbeginn mit dem Kraftfahrzeug 10 das Kraftfahrzeug 10 über eine Mindestgeschwindigkeit beschleunigen. Sobald eine Fahrgeschwindigkeit des Kraftfahrzeugs 10 die Mindestgeschwindigkeit, von beispielsweise von 30 km/h, überschreitet, kann die Steuereinrichtung 16 dazu eingerichtet sein, die Zentralverriegelung 22 anzusteuern, welche daraufhin die Fahrzeugtüren verriegelt oder abschließt. Die Mindestgeschwindigkeit beziehungsweise ein Wert der Mindestgeschwindigkeit kann einem Speicher (in Fig. nicht gezeigt) der Steuereinrichtung 16 hinterlegt sein. Ist die Zentralverriegelung 22 einmal verriegelt oder aktiviert, so kann die Zentralverriegelung 22 erst durch ein Entriegelungskriterium wieder entriegelt oder deaktiviert werden, worauf im Folgenden genauer eingegangen wird.

Damit die Zentralverriegelung 22 wieder entriegelt werden kann und ein Nutzer nach Fahrtantritt des Kraftfahrzeugs 10 dem Kraftfahrzeug 10 zusteigen kann, wird durch die Erfassungseinrichtung 14 des Kraftfahrzeugs eine aktuelle Geoposition GP eines portablen mobilen Endgeräts 24 empfangen und ausgewertet. Die Geoposition GP wird von dem portablen mobilen Endgerät 24 in einer Umgebung des Kraftfahrzeugs 10 ausgegeben oder ausgesendet. Bei dem portablen mobilen Endgerät 24 kann es sich beispielsweise um ein Mobiltelefon oder um eine elektrische Uhr, insbesondere eine Smartwatch, oder um einen Tabletcomputer handeln. Beispielsweise kann das portable mobile Endgerät 24 von einer Person 26 mitgeführt werden, welche dem Kraftfahrzeug 10 zusteigen möchte.

Damit das portable mobile Endgerät 24 die aktuelle Geoposition aussendet, kann die Erfassungseinrichtung 14 dazu eingerichtet sein, ein Erfassungssignal ES auszugeben. Das portable mobile Endgerät 24 ist dazu eingerichtet, das Erfassungssignal ES zu empfangen und durch das Empfangen des Erfassungssignals ES die aktuelle Geoposition GP auszugeben oder an die Zentralverriegelungsvorrichtung 12 zu übermitteln. Dazu kann das portable mobile Endgerät 24 ein Signal ausgeben, welches die aktuelle Geoposition GP aufweist. Mittels des Erfassungssignals ES kann die aktuelle Geoposition GP des portablen mobilen Endgeräts 24 abgefragt werden.

Nach Empfangen der aktuellen Geoposition GP übermittelt die Erfassungseinrichtung 14 die aktuelle Geoposition GP an die Steuereinrichtung 16. Diese wertet daraufhin die aktuelle Geoposition GP aus. Dabei überprüft die Steuereinrichtung 16, ob die aktuelle Geoposition GP innerhalb eines abgegrenzten vorbestimmten Bereichs 28 liegt. Der abgegrenzte vorbestimmte Bereich 28 beschreibt oder definiert ein geographisches Gebiet. Der abgegrenzte vorbestimmte Bereich 28 kann einem Speicher der Steuereinrichtung 16 hinterlegt sein.

Der abgegrenzte vorbestimmte Bereich 28 kann durch einen Nutzer oder einen Fahrer des Kraftfahrzeugs 10 vorgegeben werden. Dazu kann die Zentralverriegelungsvorrichtung 12 einen Zentralcomputer aufweisen. Mittels einer Eingabeeinrichtung 18 des Zentralcomputers kann der Nutzer den vorbestimmten Bereich eingeben. Beispielsweise kann der Nutzer eine vorbestimmte Geoposition 30 oder Koordinate vorgeben. Bei der Eingabeeinrichtung 18 kann es sich beispielsweise um ein Display handeln. Das Display kann Teil eines Navigationssystems sein. Beispielsweise kann der Zentralcomputer zur Eingabe des abgegrenzten vorbestimmten Bereichs das Navigationssystem umfassen. Als vorbestimmte Geoposition 30 kann der Nutzer beispielsweise in dem Navigationssystem einen Ort, einen Straßennamen und eine Hausnummer vorgeben. Anschließend kann der Nutzer einen Radius R um die vorbestimmte Geoposition 30 vorgeben oder festlegen, um den abgegrenzten vorbestimmten Bereich 28 festzulegen. Der Radius R kann sich dabei zwischen 5 Meter und 100 Meter um die vorbestimmte Geoposition 30 ziehen. Anstelle einen Radius um die vorbestimmte Geoposition 30 zu ziehen kann es alternativ auch vorgesehen sein, ein Rechteck, als abgegrenzten vorbestimmten Bereich, um die vorbestimmte Geoposition 30 zu legen, sodass die vorbestimmte Geoposition den Mittelpunkt des Rechtecks bildet. Zusätzlich oder alternativ kann der Nutzer auch mehrere abgegrenzte vorbestimmte Bereiche festlegen. Die Vorgabe eines vorbestimmten Bereichs um eine Koordinate kann auch als "Geofencing" bezeichnet werden. Der Nutzer kann also einen Geofence vorgeben.

Wird also durch die Steuereinrichtung 16 erfasst, dass sich das portable mobile Endgerät 24 innerhalb des abgegrenzten vorbestimmten Bereichs 28 befindet, so kann die Zentralverriegelung 22 entriegelt werden. Beispielsweise kann die Steuereinrichtung 16 zum Entriegeln der Zentralverriegelung 22 ein Entriegelungssignal an die Zentralverriegelung 22 ausgeben oder aussenden. Dadurch wird die Zentralverriegelung 22 entriegelt. Beim Entriegeln der Zentralverriegelung 22 werden die Fahrzeugtüren des Kraftfahrzeugs 10 geöffnet.

Um die Sicherheit der Fahrzeuginnsassen des Kraftfahrzeugs 10 beim Entriegeln der Zentralverriegelung 22 zu erhöhen, kann es vorgesehen sein, das ein weitere Entriegelungskriterium oder weitere Entriegelungskriterien zu erfüllen sind.

So kann es vorgesehen sein, dass sich zum Entriegeln der Zentralverriegelung 22 nicht nur das portable mobile Endgerät 24 innerhalb des abgegrenzten vorbestimmten Bereichs 28 befinden muss, sondern auch das Kraftfahrzeug 10 selbst. Die aktuelle Position des Kraftfahrzeugs 10 kann auch durch die weitere Erfassungseinrichtung 20 erfasst werden. Beispielsweise kann das Navigationssystem die weitere Erfassungseinrichtung 20 bilden. Entsprechend überprüft die Steuereinrichtung 16 die aktuelle Geoposition des portablen mobilen Endgeräts 24 und die aktuelle Position des Kraftfahrzeugs 10. Befinden sich das Kraftfahrzeug 10 und das portable mobile Endgerät 24 innerhalb des abgegrenzten vorbestimmten Bereichs, so wird die Zentralverriegelung 22 entriegelt.

Zusätzlich kann es vorgesehen sein, dass zum Entriegeln der Zentralverriegelung 22 eine Kennung K des portablen mobilen Endgeräts 24 mit einer der Steuereinrichtung 16 hinterlegten Kennung übereinstimmen muss. Dazu kann die Erfassungseinrichtung 14 dazu eingerichtet sein, durch das Ausgeben des Erfassungssignals ES neben der Geoposition auch die Kennung K des portablen mobilen Endgeräts 24 abzufragen. Das portable mobile Endgerät 24 ist dazu eingerichtet, das Erfassungssignal ES zu empfangen und durch das Empfangen des Erfassungssignals ES das Kennungssignal KS auszugeben. Mittels des Erfassungssignals ES wird die Kennung K des portablen mobilen Endgeräts 24 abgefragt. Das durch das portable mobile Endgerät 24 ausgegebene Kennungssignal KS umfasst die durch die Erfassungseinrichtung 14 abgefragte Kennung K. Das Kennungssignal KS ist bevorzugt gemäß einem WLAN-Standard oder Bluetooth-Standard ausgebildet, welches zum Aufbauen eines Kommunikationsnetzwerks vorgesehen ist. Die Erfassungseinrichtung 14 kann also ferner dazu eingerichtet sein, ein WLAN-Signal oder Bluetooth-Signal als Kennungssignal KS zu empfangen. Beim Empfangen des Kennungssignals KS ist die Erfassungseinrichtung 14 dazu eingerichtet, die Kennung K an die Steuereinrichtung 16 zu übermitteln oder zu übertragen.

Die Steuereinrichtung 16 ist anschließend dazu eingerichtet, die empfangene Kennung K mit einer der Steuereinrichtung 16 hinterlegten Kennung, insbesondere in einer Auswertephase, zu vergleichen. Der Steuereinrichtung 16 kann auch mehr als eine Kennung hinterlegt sein. Beispielsweise können die Kennungen ebenfalls in dem Speicher der Steuereinrichtung 16 hinterlegt sein.

Das Hinterlegen einer oder mehrerer Kennungen kann durch den Nutzer erfolgen. Dazu kann der Nutzer die Kennung oder mehrere Kennungen eines oder mehrerer portabler mobiler Endgeräte 24 über die Eingabeeinrichtung 18 dem Zentralcomputer eingeben. Alternativ kann auch ein Anlernvorgang erfolgen. Dabei kann die Erfassungseinrichtung 14 eines oder mehrere portable mobile Endgeräte Erfassen und deren Kennung abfragen. Dem Nutzer können dann auf einem Bildschirm, welcher beispielsweise an einer Mittelkonsole in einem Innenraum des Kraftfahrzeugs 10 angeordnet ist, die Kennungen angezeigt werden. Durch eine Bestätigung des Nutzers können die abgefragten Kennungen der Steuereinrichtung 16 hinterlegt werden.

Stimmt die empfangene Kennung K des portablen mobilen Endgeräts 24 mit der Steuereinrichtung 16 hinterlegten Kennung überein, und befindet sich das portable mobile Endgerät innerhalb des abgegrenzten vorbestimmten Bereichs 28 ist das Entriegelungskriterium erfüllt. Daraufhin kann die Steuereinrichtung 16 die Zentralverriegelung 22 ansteuern.

Insgesamt ist durch die Erfindung ein Verfahren zur Autorisierung eines Fahrzeugzugangs beschrieben.

Gemäß einer besonders bevorzugten Ausführungsform wird durch Analyse von Bluetooth Informationen und GPS Ortung eines portablen mobilen Endgeräts die Zentralverriegelung automatisch entriegelt. Ist Bluetooth am portablen mobilen Endgerät, wie beispielsweise einem Smartphone, eines gewünschten Mitfahrers aktiviert, so kann dieses vom Fahrzeug ausgewertet werden. Weiterhin kann alternativ oder in Kombination ein Geofence an einem bestimmten Ort ausgewählt werden, in welchem ein Zustieg unkritisch erfolgen kann. Um fehlerhafte Entriegelungen weiter zu vermeiden kann die Funktion mit einer Freigabeuhrzeit und/oder Datum kombiniert werden. Bluetooth liefert eine eineindeutige MAC Adresse des portablen mobilen Endgeräts, welche nicht gefälscht werden kann. Diese kann bei Verbindung mit dem Zentralcomputer des Kraftfahrzeugs ausgewertet und gespeichert werden. Das Kraftfahrzeug verfügt über eine GPS Position. Die GPS Position des Kraftfahrzeugs kann durch eine Erfassungseinrichtung des Kraftfahrzeugs erfasst werden. Die Einstellung des Geofence kann im Kraftfahrzeug, zum Beispiel durch den Nutzer, erfolgen, sobald sich das Kraftfahrzeug an gewünschter Stelle befindet. Zudem kann ein Radius um die Koordinate angegeben werden.

Will der Nutzer zum Beispiel jeden Werktag Kinder von der Schule abholen oder in einer Fahrgemeinschaft einen Mitfahrer abholen, so kann durch Angabe des Geofence und/oder Anlernen der Bluetooth ID der Zugang bei einer Geschwindigkeit des Kraftfahrzeugs von 0km/h, also im Stillstand des Kraftfahrzeugs, gewährt werden.

## Patentansprüche

1. Verfahren zum Betreiben einer Zentralverriegelungsvorrichtung (12) eines Kraftfahrzeugs (10), welches durch eine Zentralverriegelung (22) der Zentralverriegelungsvorrichtung (12) aufgrund einer Fahrt über eine Mindestgeschwindigkeit verriegelt worden ist und danach unter die Mindestgeschwindigkeit verlangsamt worden ist, wobei zum anschließenden Entriegeln der Zentralverriegelung (22) folgende Schritte vorgesehen sind:
- Empfangen einer aktuellen Geoposition (GP) eines portablen mobilen Endgeräts (24), welches die Geoposition (GP) aussendet, mittels einer Erfassungseinrichtung (14) der Zentralverriegelungsvorrichtung (22);
- Auswerten der aktuellen Geoposition (GP) des portablen mobilen Endgeräts (24) mittels einer Steuereinrichtung (16) der Zentralverriegelungsvorrichtung (12), wobei beim Auswerten der aktuellen Geoposition (GP) die Steuereinrichtung (16) überprüft, ob die aktuelle Geoposition (GP) innerhalb eines abgegrenzten, vorbestimmten Bereichs (28) liegt, welcher in der Steuereinrichtung (16) hinterlegt ist und
- Entriegeln der Zentralverriegelung (22), wenn die aktuelle Geoposition (GP) innerhalb des abgegrenzten vorbestimmten Bereichs (28) liegt.

2. Verfahren nach Anspruch 1,
**dadurch gekennzeichnet, dass**
der abgegrenzte, vorbestimmte Bereich (28) durch Vorgabe eines Radius (R) um eine vorbestimmte Geoposition (30) festgelegt wird.

3. Verfahren nach Anspruch 1 oder 2,
**dadurch gekennzeichnet, dass**
die Zentralverriegelung (22) erst entriegelt wird, wenn bei Empfangen der aktuellen Geoposition (GP) des portablen mobilen Endgeräts (24) sich auch das Kraftfahrzeug (10) innerhalb des abgegrenzten vorbestimmten Bereichs (28) befindet.

4. Verfahren nach einem der vorhergehenden Ansprüche,
**dadurch gekennzeichnet, dass**
die Zentralverriegelung (22) nur entriegelt wird, falls die Zündung des Kraftfahrzeugs (10) eingeschaltet ist und/oder ein Funkschlüssel im Fahrzeuginnenraum des Kraftfahrzeugs (10) detektiert wird.

5. Verfahren nach einem der vorhergehenden Ansprüche,
**dadurch gekennzeichnet, dass**
eine Kennung (K) des portablen mobilen Endgeräts (24) durch die Erfassungseinrichtung (14) empfangen wird und mit zumindest einer der Steuereinrichtung (16) hinterlegten Kennung verglichen wird, wobei die Zentralverriegelung (22) erst entriegelt wird, wenn zusätzlich die empfangene Kennung (K) mit der zumindest einen Kennung übereinstimmt.

6. Verfahren nach einem der vorhergehenden Ansprüche,
**dadurch gekennzeichnet, dass**
bei Empfangen der aktuellen Geoposition (GP) eine Uhrzeit erfasst wird, wobei die Zentralverriegelung (22) erst entriegelt wird, wenn die Uhrzeit, zu der die aktuelle Geoposition (GP) empfangen wurde innerhalb eines der Steuereinrichtung (16) hinterlegten Zeitfensters liegt.

7. Zentralverriegelungsvorrichtung (12) für ein Kraftfahrzeug (10), wobei eine Steuereinrichtung (16) der Zentralverriegelungsvorrichtung (12) dazu eingerichtet ist, eine Zentralverriegelung (22) aufgrund einer Fahrt des Kraftfahrzeugs (10) über eine Mindestgeschwindigkeit zu verriegeln, ferner umfassend:
- eine Erfassungseinrichtung (14), welche dazu eingerichtet ist, eine aktuelle Geoposition (GP) eines portablen mobilen Endgeräts (24), welches die Geoposition (GP) aussendet, zu empfangen, wobei
- die Steuereinrichtung (16) dazu eingerichtet ist, die aktuelle Geoposition (GP) des portablen mobilen Endgeräts (24) auszuwerten, wobei beim Auswerten der aktuellen Geoposition (GP) die Steuereinrichtung (16) dazu eingerichtet ist, zu überprüfen, ob die aktuelle Geoposition (GP) innerhalb eines abgegrenzten, vorbestimmten Bereichs (28) liegt, welcher in der Steuereinrichtung (16) hinterlegt ist, wobei
- die Steuereinrichtung (16) ferner dazu eingerichtet ist, die Zentralverriegelung (22) der Zentralverriegelungsvorrichtung (12) zu entriegeln, wenn das Kraftfahrzeug (10) unter die Mindestgeschwindigkeit verlangsamt worden ist und die aktuelle Geoposition (GP) innerhalb des abgegrenzten, vorbestimmten Bereichs (28) liegt.

8. Zentralverriegelungsvorrichtung (12) nach Anspruch 7,
**dadurch gekennzeichnet, dass**
das portable mobile Endgerät (24) als Mobiltelefon oder als elektrische Uhr, insbesondere als Smartwatch, oder als Tabletcomputer oder als Augmented Reality Brille oder als Headset ausgebildet ist.

9. Zentralverriegelungsvorrichtung (12) nach Anspruch 7 oder 8,
**dadurch gekennzeichnet, dass**
die Erfassungseinrichtung (14) als Dachantenne ausgebildet ist und/oder die Erfassungseinrichtung (14) dazu eingerichtet ist, ein WLAN-Signal oder Bluetooth-Signal zu empfangen.

10. Kraftfahrzeug (10) mit einer Zentralverriegelungsvorrichtung (12) nach einem der Ansprüche 7 bis 9.

## Claims

1. Method for operating a central locking system (12) of a motor vehicle (10), which has been locked by means of a central locking (22) of the central locking system (12) for reasons of a journey above a minimum speed and thereafter has been slowed down to below the minimum speed, wherein for the subsequent unlocking of the central locking (22) following steps are provided:
- reception of the current geo-location (GP) of a portable mobile end device (24), which transmits the geo-location (GP), by means of a detection device (14) of the central locking system (22);
- evaluation of the current geo-location (GP) of the portable mobile end device (24) by means of a control device (16) of the central locking system (12), wherein when evaluating the current geo-location (GP) the control device (16) checks whether the current geo-location (GP) lies within a delimited, predetermined area (28) which is stored in the control device (16) and
- unlocking of the central locking (22) when the actual geo-location (GP) lies within the delimited predetermined area (28).

2. Method according to claim 1,
**characterised in that**
the delimited, predetermined area (28) is defined by specifying a radius (R) about a predetermined geo-location (30).

3. Method according to claim 1 or 2,
**characterised in that**
the central locking (22) is unlocked only when at the reception of the current geo-location (GP) of the portable mobile end device (24) also the motor vehicle (10) is located within the delimited predetermined area (28).

4. Method according to any of the preceding claims,
**characterised in that**
the central locking (22) is only unlocked in the case that the ignition of the motor vehicle (10) is switched on and/or a wireless key is detected in the vehicle interior of the motor vehicle (10).

5. Method according to any of the preceding claims,
**characterised in that**
an identifier (K) of the portable mobile end device (24) on the part of the detection device (14) is received and is compared with at least one identifier stored in the control device (16), wherein the central locking (22) is only unlocked when in addition the received identifier (K) matches the at least one identifier.

6. Method according to any of the preceding claims,
**characterised in that**
at the reception of the current geo-location (GP), a time is detected, wherein the central locking (22) is only unlocked when the time at which the actual geo-location (GP) was received lies within a time window stored in the control device (16).

7. Central locking system (12) for a motor vehicle (10), wherein a control device (16) of the central locking system (12) is configured to lock a central locking (22) by reason of a journey of the motor-vehicle (10) above a minimum speed, further comprising:
- a detection device (14) which is configured to receive a current geo-location (GP) of a portable mobile end device (24) which transmits the geo-location (GP), wherein
- the control device (16) is configured to evaluate the current geo-location (GP) of the portable mobile end device (24), wherein at the evaluation of the current geo-location (GP), the control device (16) is configured to check whether the current geo-location (GP) lies within a delimited, predetermined area (28) which is stored in the control device (16),
wherein
- the control device (16) is further configured to unlock the central locking (22) of the central locking device (12) when the motor-vehicle (10) has been slowed to below the minimum speed and the current geo-location (GP) lies within the delimited, predetermined area (28).

8. Central locking device (12) according to claim 7,
**characterised in that**
the portable mobile end device (24) is in the form of a mobile telephone or an electronic clock, in particular a smartwatch, or a tablet computer or a pair of augmented reality spectacles or a headset.

9. Central locking device (12) according to claim 7 or 8,
**characterised in that**
the detection device (14) is in the form of a roof antenna and/or the detection device (14) is configured to receive a Wi-Fi signal or Bluetooth signal.

10. Motor vehicle (10) having a central locking device (12) according to any of claims 7 to 9.

## Revendications

1. Procédé de fonctionnement d'un système de condamnation centralisée (12) d'un véhicule à moteur (10), qui a été condamné par une condamnation centralisée (22) du système de condamnation centralisée (12) en raison d'un trajet au-dessus d'une vitesse minimum et ensuite a été ralenti sous la vitesse minimum, dans lequel les étapes suivantes sont prévues pour le déverrouillage subséquent de la condamnation centralisée (22) :
- réception d'une géoposition actuelle (GP) d'un terminal mobile portable (24), lequel émet la géoposition (GP), au moyen d'un dispositif de détection (14) du système de condamnation centralisée (22) ;
- évaluation de la géoposition actuelle (GP) du terminal mobile portable (24) au moyen d'un dispositif de commande (16) du système de condamnation centralisée (12), dans lequel lors de l'évaluation de la géoposition actuelle (GP), le dispositif de commande (16) vérifie si la géoposition actuelle (GP) se trouve à l'intérieur d'une plage prédéterminée délimitée (28), laquelle est consignée dans le dispositif de commande (16), et
- déverrouillage de la condamnation centralisée (22), lorsque la géoposition actuelle (GP) se trouve à l'intérieur de la plage prédéterminée délimitée (28).

2. Procédé selon la revendication 1,
**caractérisé en ce que**
la plage prédéterminée délimitée (28) est déterminée par prescription d'un rayon (R) autour d'une géoposition prédéterminée (30).

3. Procédé selon la revendication 1 ou 2,
**caractérisé en ce que**
la condamnation centralisée (22) n'est déverrouillée que lorsque, lors de la réception de la géoposition actuelle (GP) du terminal mobile portable (24), le véhicule à moteur (10) se trouve également à l'intérieur de la plage prédéterminée délimitée (28).

4. Procédé selon l'une quelconque des revendications précédentes,
**caractérisé en ce que**
la condamnation centralisée (22) n'est déverrouillée que si l'allumage du véhicule à moteur (10) est activé et/ou une radiocommande est détectée dans l'habitacle du véhicule à moteur (10).

5. Procédé selon l'une quelconque des revendications précédentes,
**caractérisé en ce que**
un identifiant (K) du terminal mobile portable (24) est reçu par le dispositif de détection (14) et est comparé avec au moins un identifiant consigné dans le dispositif de commande (16), dans lequel la condamnation centralisée (22) n'est déverrouillée que lorsque l'identifiant (K) reçu coïncide en plus avec l'au moins un identifiant.

6. Procédé selon l'une quelconque des revendications précédentes,
**caractérisé en ce que**
lors de la réception de la géoposition actuelle (GP), une heure est détectée, dans lequel la condamnation centralisée (22) n'est déverrouillée que quand l'heure à laquelle la géoposition actuelle (GP) a été reçue se trouve à l'intérieur d'une fenêtre de temps consignée dans le dispositif de commande (16).

7. Système de condamnation centralisée (12) pour un véhicule à moteur (10), dans lequel un dispositif de commande (16) du système de condamnation centralisée (12) est aménagé pour condamner une condamnation centralisée (22) sur la base d'un trajet du véhicule à moteur (10) au-dessus d'une vitesse minimum, comprenant en outre :
- un dispositif de détection (14), lequel est aménagé pour recevoir une géoposition actuelle (GP) d'un terminal mobile portable (24), lequel émet la géoposition actuelle (GP), dans lequel
- le dispositif de commande (16) est aménagé pour évaluer la géoposition actuelle (GP) du terminal mobile portable (24), dans lequel lors de l'évaluation de la géoposition actuelle (GP), le dispositif de commande (16) est aménagé pour vérifier si la géoposition actuelle (GP) se trouve à l'intérieur d'une plage prédéterminée délimitée (28), laquelle est consignée dans le dispositif de commande (16), dans lequel
- le dispositif de commande (16) est aménagé en outre pour déverrouiller la condamnation centralisée (22) du système de condamnation centralisée (12), lorsque le véhicule à moteur (10) a été ralenti sous la vitesse minimum et la géoposition actuelle (GP) se trouve à l'intérieur de la plage prédéterminée délimitée (28).

8. Système de condamnation centralisée (12) selon la revendication 7,
**caractérisé en ce que**
le terminal mobile portable (24) est réalisé en tant que téléphone mobile ou en tant que montre électrique, en particulier en tant que montre intelligente, ou en tant que tablette ou en tant que lunettes de réalité augmentée ou en tant que casque.

9. Système de condamnation centralisée (12) selon la revendication 7 ou 8,
**caractérisé en ce que**
le dispositif de détection (14) est réalisé en tant qu'antenne de toit et/ou le dispositif de détection (14) est aménagé pour recevoir un signal WiFi ou signal Bluetooth.

10. Véhicule à moteur (10) avec un système de condamnation centralisée (12) selon l'une quelconque des revendications 7 à 9.
